# EUROPEAN PATENT SPECIFICATION

(11) **EP 4 318 785 B1**
(45) Date of publication and mention of the grant of the patent: **12.08.2026**
(21) Application number: 23788500.9
(22) Date of filing: 28.03.2023
(51) Int. Cl.: H01M 50/533, H01M 50/54, H01M 50/586

(54) **SECONDARY BATTERY WITH IMPROVED SAFETY**
SEKUNDÄRBATTERIE MIT VERBESSERTER SICHERHEIT
BATTERIE SECONDAIRE À SÉCURITÉ AMÉLIORÉE

(30) Priority: 12.04.2022 KR 20220045170; 27.03.2023 KR 20230039585
(43) Date of publication of application: 07.02.2024
(73) Proprietor: LG ENERGY SOLUTION, LTD., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/004093
(87) International publication number: WO 2023/200148

(56) References cited:
- EP-A1- 4 358 278
- JP-A- 2018 181 447
- KR-A- 20150 114 277
- KR-A- 20160 131 266
- KR-A- 20180 091 324
- KR-A- 20190 094 668

## Description

### [Cross-Reference to Related Applications]

This application is a National Phase entry of International Application No. PCT/KR2023/004093, filed on March 28, 2023, and claims the benefit of and priority to Korean Patent Application No. 10-2022-0045170, filed on April 12, 2022 and Korean Patent Application No. 10-2023-0039585, filed on March 27, 2023.

### [Technical Field]

The present disclosure relates to a secondary battery, and more particularly, to a secondary battery in which the safety of an electrode tab is maintained even when a swelling phenomenon of an electrode assembly occurs.

### [Background]

Secondary batteries are rechargeable unlike primary batteries, and also, due to the possibility of a compact size and high capacity, recently, many studies on the secondary batteries are being carried out. The demand for secondary batteries as an energy source is more rapidly increasing due to technology development and an increase in the demand for mobile devices, as well as electric vehicles and energy storage systems that are emerging to meet the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator interposed therebetween are sequentially stacked, and a stack/folding type electrode assembly in which stacked type unit cells are wound together with a separation film having a long length.

One of the problems that may occur when using a secondary battery for a long time is a swelling phenomenon. The swelling phenomenon refers to a phenomenon in which a secondary battery repeating charging and discharging gradually swells. The swelling phenomenon is a phenomenon in which a lithium ion electrolyte in the battery vaporizes and the resulting pressure causes the battery to become convex, and may cause deformation of a case, and in severe cases, the electrolyte may leak out, which leads to a fire or explosion.

The swelling phenomenon affects not only an external appearance of the secondary battery, but also an internal structure of the secondary battery. That is, when the swelling phenomenon occurs in an electrode assembly, stress is accumulated as a tensile force acts on an electrode tab that extends from the electrode assembly and is welded to an electrode terminal. Once the swelling phenomenon occurs, since it will not return to a normal condition, the electrode tab will continue to be pulled, and eventually the stress will exceed a limit and the electrode tab is disconnected.

Accordingly, in order to safely use the secondary battery for a long time, a structure capable of preventing the disconnection of the electrode tab in response to the swelling phenomenon is required.

KR 2019 0 094 668 A discloses a battery module in which an electrode lead of any one battery cell is connected to an electrode lead of a neighboring battery cell and a busbar unit by welding or the like. The electrode leads are bent at least once outside the battery case to secure a predetermined length and are at least partially unbent due to the swelling of the plurality of battery cells.

EP 4 358 278 A1 discloses a battery that includes an electrode assembly. The electrode assembly includes a first electrode including a first portion and a first tab extending from the first portion, a separator laminated on the first electrode, and a second portion and a second tab extending from the second portion, and a second electrode laminated on the separator. The battery further includes a current collector assembly including a plate, a first current collector coupled to a proximal end of the plate and including a first part and a second part opposite to the first part, and a second current collector coupled to a distal end of the plate and including a third part and a fourth part opposite to the third part. The battery may further include a housing coupled to the plate. The first and second parts of the first current collector may be configured to move in opposite directions.

### [Summary]

### [Technical Problem]

The present disclosure is directed to providing a secondary battery capable of preventing the disconnection of an electrode tab even when a swelling phenomenon occurs during use of the secondary battery.

However, the technical problem to be solved by the present disclosure is not limited to the above-described problem, and other problems not mentioned can be clearly understood by a person skilled in the art from the description of the invention described below.

### [Technical Solution]

The present invention is defined according to the subject matter of the appended independent claims. Particular embodiments are given by the additional features of the appended dependent claims.

### [Advantageous Effects]

In a secondary battery of the present disclosure having the above configuration, an electrode tab includes an excess length part, so that excessive stress will not be applied to a welding part even when a swelling phenomenon occurs in an electrode assembly due to battery degradation caused by repeated charging and discharging or an impact. Accordingly, according to the secondary battery of the present disclosure, the safety of a secondary battery can be reliably maintained for a long time by preventing the disconnection of the electrode tab even when the swelling phenomenon occurs.

In addition, according to the present disclosure, by supporting an intermediate portion of the electrode tab and inducing the movement of the electrode tab accompanying swelling into a sliding movement by using a clip, the electrode tab can be designed to move only proportionally to the level of swelling. Accordingly, the excess length part of the electrode tab can effectively respond to the swelling phenomenon of the electrode assembly, and the position and movement of the excess length part can be accurately controlled, so that a risk such as an internal short circuit can be effectively eliminated.

However, the technical effects that can be obtained through the present disclosure is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present disclosure and serve to facilitate understanding of the technical idea of the present disclosure together with the detailed description of the invention described below, the present disclosure should not be limitedly interpreted on the basis of the drawings.
FIG. 1 is an exploded perspective view illustrating a secondary battery of the present disclosure.
FIG. 2 is a view illustrating a coupling structure of an electrode tab and a clip of an electrode assembly.
FIG. 3 is a view illustrating a change in the electrode tab supported by the clip when a swelling phenomenon occurs in the electrode assembly.
FIG. 4 is a view illustrating a case in which a plurality of electrode assemblies are supported by a plurality of clips.
FIG. 5 is a view illustrating a case in which the plurality of electrode assemblies are supported by one clip.
FIG. 6 is a view illustrating a case in which an embossing structure is applied as a friction-reducing structure provided in a ligation part of the clip.
FIG. 7 is a view illustrating a case in which a low-friction coating layer is applied as the friction-reducing structure provided in the ligation part of the clip.
FIG. 8 is a view illustrating one embodiment of an insertion guiding part provided in the clip.

### [Detailed Description]

The present disclosure may have various modifications and various embodiments, and thus specific embodiments thereof will be described in detail below.

The present disclosure relates to a secondary battery including an electrode assembly in which a plurality of unit cells are stacked. In one example, respective electrode tabs of the unit cells, which extend from the electrode assembly, are gathered together and electrically connected to an electrode terminal of the secondary battery, and the electrode tab of each unit cell includes an excess length part corresponding to the swelling of the electrode assembly.

In a specific embodiment, in the secondary battery of the present disclosure, the electrode tab of each unit cell, which extends from the electrode assembly, is supported by a clip electrically connected to the electrode terminal, and the excess length part is formed after the ligation part of the clip.

Accordingly, in the present disclosure, since the electrode tab includes the excess length part, excessive stress will not be applied to a welding part even when swelling of the electrode assembly, that is, a swelling phenomenon, occurs due to battery degradation caused by repeated charging and discharging of the secondary battery or an impact. Accordingly, according to the secondary battery of the present disclosure, the safety of a secondary battery may be reliably maintained for a long time by preventing the disconnection of the electrode tab even when the swelling phenomenon occurs.

In addition, by supporting an intermediate portion of the electrode tab and inducing the movement (pulled by a tensile force) of the electrode tab accompanying swelling into a sliding movement by using a clip, the electrode tab may be designed to move only proportionally to the level of swelling. Accordingly, the excess length part of the electrode tab may effectively respond to the swelling phenomenon of the electrode assembly, and the position and movement of the excess length part are accurately designed, so that a risk such as an internal short circuit may be effectively removed.

### [Mode for Invention]

Hereinafter, specific embodiments of a secondary battery of the present disclosure will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [First embodiment]

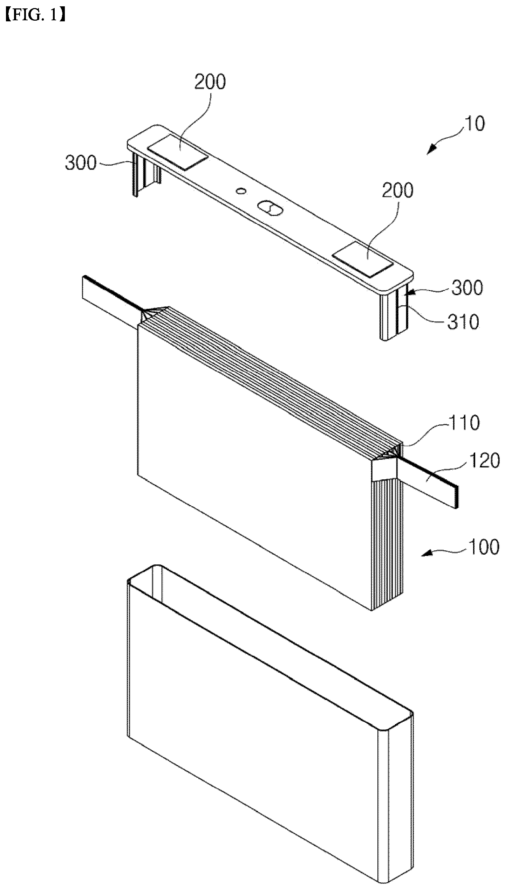

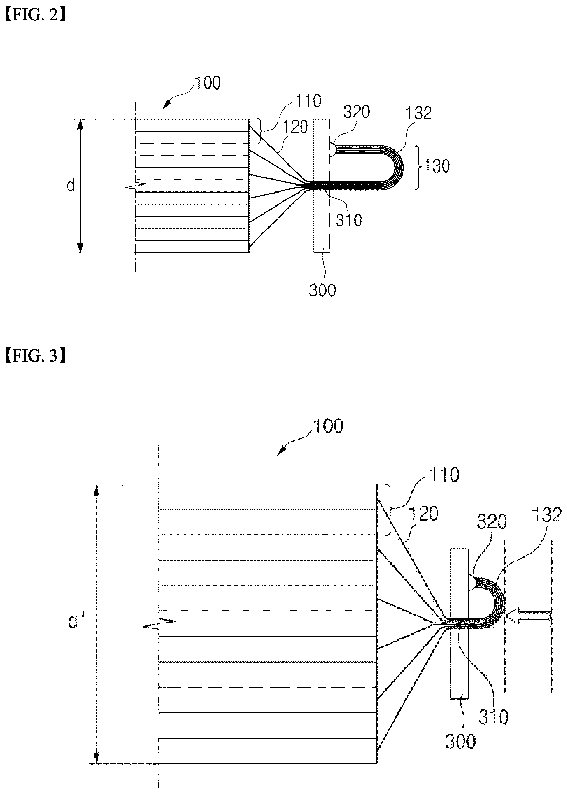

FIG. 1 is an exploded perspective view illustrating a secondary battery 10 of the present disclosure, and FIG. 2 is a view illustrating a coupling structure of electrode tabs 120 and a clip 300 of an electrode assembly 100.

As shown in the accompanying drawings, the present disclosure relates to a structure applicable to the secondary battery 10 including the electrode assembly 100 in which a plurality of unit cells 110 are stacked, for example, the secondary battery 10, which has a prismatic shape, shown in the drawing, and here, the respective electrode tabs 120 of unit cells 110, which extend from the electrode assembly 100, are gathered together and electrically connected to an electrode terminal 200 of the secondary battery 10, and the electrode tab 120 of each unit cell 110 has an excess length part 130 corresponding to the swelling of the electrode assembly 100.

A swelling phenomenon simply refers to a phenomenon in which the electrode assembly 100 repeating charging and discharging gradually swells. The swelling phenomenon is a phenomenon in which a lithium ion electrolyte in the battery vaporizes and the resulting pressure causes the battery to become convex, and may cause deformation of a case 20, and in severe cases, the electrolyte may leak out, which leads to a fire or explosion.

One of the problems of the swelling phenomenon on an internal structure of the secondary battery 10 is that stress is generated in the electrode tab 120. In the electrode assembly 100, for example, the stacked type electrode assembly 100, the electrode tab 120 (a positive electrode tab or negative electrode tab) of each stacked unit cell 110 is welded to the electrode terminal 200, and a distance from each unit cell 110 to the electrode terminal 200 is different.

In this structure, when a swelling phenomenon occurs in the electrode assembly 100, a relative position of the unit cell 110 changes more as the unit cell 110 is further away from the electrode terminal 200, and thus a strong tensile force acts on the electrode tab 120 of the distant unit cell 110. Since only a margin for process deviation is considered in the design of a welding part 320 of the electrode tab 120 and the electrode terminal 200, when the battery degenerates and a swelling phenomenon occurs, an electrode tab 120 subjected to a strong tensile force is easily short-circuited at the electrode terminal 200, and the disconnection of the electrode tab 120 adversely affects the safety of the secondary battery 10.

In order to prevent the disconnection of the electrode tab 120 accompanying such a swelling phenomenon, in the present disclosure, the electrode tab 120 of each unit cell 110 includes the excess length part 130 corresponding to the swelling of the electrode assembly 100. Even when the swelling phenomenon occurs and thus the relative position between the unit cell 110 and the electrode terminal 200 is significantly changed, the excess length part 130 changes in response to the change in relative position, so that the electrode tab 120 is not stressed.

According to a specific embodiment of the present disclosure shown in FIGS. 1 and 2, the electrode tab 120 of each unit cell 110, which extends from the electrode assembly 100, is supported by the clip 300 electrically connected to the electrode terminal 200, and the excess length part 130 is formed after a ligation part 310 of the clip 300. In addition, an end portion of the excess length part 130 forms the welding part 320 to be joined to the clip 300, and thus, the electrode tab 120 is electrically connected to the electrode terminal 200 through the clip 300.

The clip 300 of the present disclosure refers to a component for physically holding and supporting a bundle of electrode tabs 120, regardless of the shape thereof. For example, as shown in the drawings, the electrode tab 120 may be inserted and temporarily fixed in a slit provided in the clip 300. Here, the temporary fixing means that the position of the electrode tab 120 inserted into the clip 300 is normally fixed, but relative movement may occur when a certain amount of tensile force is applied.

The ligation part 310 of the clip 300 is a part (e.g., the slit described above) that presses and temporarily fixes the electrode tab 120, and the excess length part 130 formed after the ligation part 310 of the clip 300 corresponds to the swelling of the electrode assembly 100. When the electrode assembly 100 swells and a tensile force is applied to the electrode tab 120 of the unit cell 110, the excess length part 130 passing through the ligation part 310 moves toward the electrode assembly 100, so that the stress applied to the electrode tab 120 is greatly relieved.

For reference, in the drawing, the polarities of the electrode tab 120 and the electrode terminal 200 are not particularly distinguished because the configuration of the clip 300 and the excess length part 130 of the electrode tab 120 can be applied regardless of positive and negative electrodes.

The excess length part 130 forms a U-shaped part 132 between the ligation part 310 and the welding part 320. The U-shaped part 132 has a gentle curve toward the ligation part 310 of the clip 300, thereby reducing resistance that interferes with the movement of the excess length part 130.

FIG. 3 is a view illustrating a change in the electrode tab 120 supported by the clip 300 when a swelling phenomenon occurs in the electrode assembly 100. In comparision with FIG. 2, as a thickness of the electrode assembly 100 swells (the thickness is increased from d to d'), a relative movement away from the ligation part 310 of the clip 300 occurs more when the unit cell 110 is further outside, but since the excess length part 130 moves as much as the displacement of the electrode tab 120, a disconnection of the electrode tab 120 may be prevented.

When the movement of the electrode tab 120 accompanying swelling is induced into a sliding movement while supporting an intermediate portion of the electrode tab 120 by using the clip 300 as in the illustrated embodiment, the electrode tab 120 can be accurately designed so that the electrode tab 120 moves in proportion to the level of swelling. Accordingly, the excess length part 130 of the electrode tab 120 can effectively respond to the swelling phenomenon of the electrode assembly 100, and the position and movement of the excess length part 130 may be accurately controlled, thereby removing a risk such as an internal short circuit.

Meanwhile, according to an embodiment, a plurality of electrode assemblies 100 may be provided, and in this case, the electrode tab 120 extending from each of the plurality of electrode assemblies 100 may form the ligation part 310 independent of the clip 300.

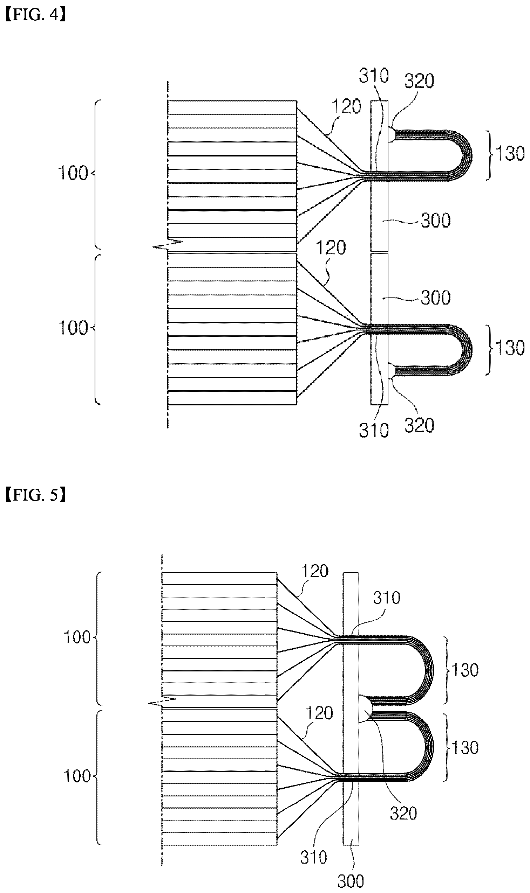

FIG. 4 is a view illustrating a case in which the plurality of electrode assemblies 100 are supported by a plurality of clips 300. In other words, the plurality of clips 300 are provided corresponding to the number of electrode assemblies 100, each of the electrode assemblies 100 is supported by the ligation part 310 of the clip 300 corresponding thereto, and an end portion of the excess length part 130 provided by the electrode tab 120 extending from each electrode assembly 100 forms the welding part 320 for the corresponding clip 300. That is, the embodiment of FIG. 4 corresponds to multiple embodiments of FIG. 2 being arranged in parallel.

Alternatively, as shown in FIG. 5, the plurality of electrode assemblies 100 may be supported by one clip 300. Referring to FIG. 5, one clip 300 includes a plurality of ligation parts 310 corresponding to the number of electrode assemblies 100, and each electrode assembly 100 is supported by the corresponding ligation part 310.

In addition, an end portion of the excess length part 130 provided by the electrode tab 120 extending from each electrode assembly 100 may form the welding part 320 thereof, but as shown in the drawing, a plurality of excess length parts 130 may form one welding part 320. Reducing the number of welding parts 320 is advantageous in terms of process efficiency.

Here, the above-described fact that the excess length part 130, which is provided by the electrode tab 120 extending from each of the plurality of electrode assemblies 100, may form the U-shaped part 132 between the ligation part 310 and the welding part 320, can be applied as it is.

### [Second embodiment]

The second embodiment of the present disclosure further includes a configuration for reducing the resistance associated with the sliding movement of the excess length part 130, which is temporarily fixed to the ligation part 310 of the clip 300, when the excess length part 130 slidingly moves due to a swelling phenomenon. That is, the present embodiment is for preventing the electrode tab 120 from being unintentionally disconnected due to a strong resistance applied when the excess length part 130 slidingly moves.

To this end, in the second embodiment of the present disclosure, a friction-reducing structure 330 is provided on a contact surface of the ligation part 310 of the clip 300 that supports the electrode tab 120 of the electrode assembly 100. By providing the friction-reducing structure 330 on the contact surface of the ligation part 310, which presses the electrode tab 120, the sliding movement of the excess length part 130 may occur smoothly.

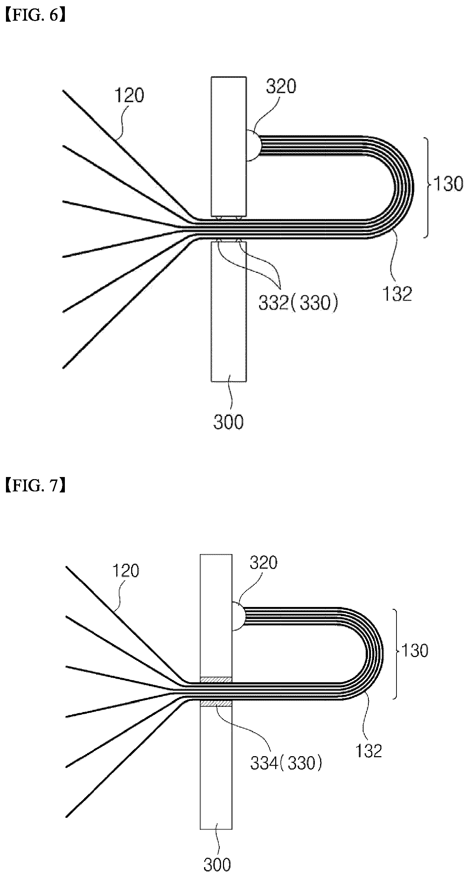

The friction-reducing structure 330 provided in the ligation part 310 may be implemented in various forms. For example, as shown in FIG. 6, an embossing structure 332 may be applied as the friction-reducing structure 330 provided in the ligation part 310 of the clip 300. The embossing structure 332, which is similar in shape to a hemisphere, reduces sliding resistance by reducing a contact area. In addition, various types of protrusion structures may be applied as the friction-reducing structure 330.

Alternatively, a low-friction coating layer 334 shown in FIG. 7 may be applied as the friction-reducing structure 330. As the term implies, the low-friction coating layer 334 refers to various coating layers that reduce the coefficient of friction of a surface. For example, a chemically stable Teflon coating layer or a mechanically superior diamond-like carbon (DLC) coating layer may be applied.

### [Third embodiment]

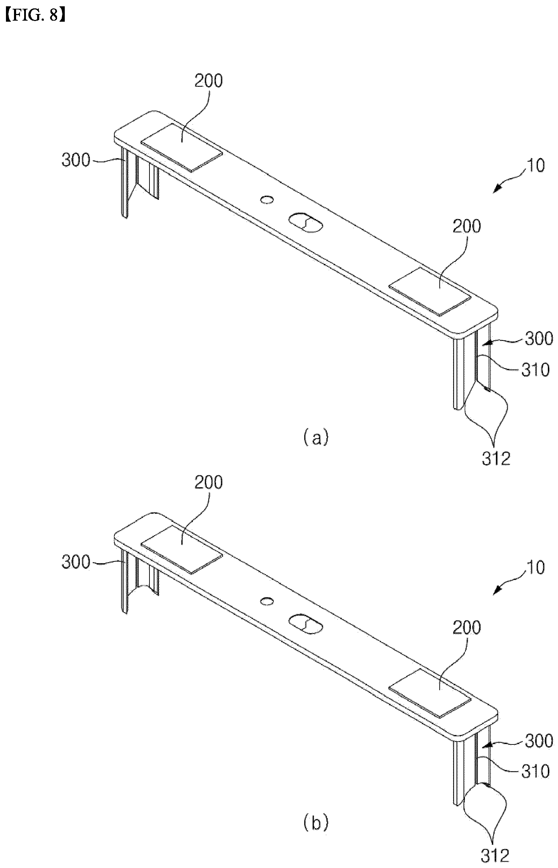

FIG. 8 illustrates a third embodiment of the present disclosure, which includes a structure in which an insertion guiding part is provided in the clip.

The electrode assembly 100 in which a plurality of unit cells 110 are stacked includes a bundle of electrode tabs 120 corresponding to the number of unit cells 110, and the bundle of electrode tabs 120 needs to be gathered into one and temporarily fixed to the ligation part 310 of the clip 300. The ligation part 310 may have, for example, a slit structure in which the clip 300, as shown in FIG. 1, is thinly cut along a longitudinal direction.

When the thickness of the electrode assembly 100 increases due to a swelling phenomenon, the electrode tab 120 of each unit cell 110 slidingly moves with respect to the ligation part 310, and in order to offset this, the bundle of electrode tabs 120 must be smoothly inserted into the ligation part 310 without causing damage to the electrode tab 120. For example, when the thickness of the electrode assembly 100 is increased to increase capacity, the bundle of electrode tabs 120 may become correspondingly thicker, and when the bundle of electrode tabs 120 is inserted into the ligation part 310, bending, folding, tearing, or the like may occur.

The third embodiment is for preventing such a problem, and as shown in FIG. 8, the clip 300 includes an insertion guiding part 312 for assisting the electrode tab 120 of each unit cell 110 to be inserted into the ligation part 310.

For example, the insertion guiding part 312 may be provided in the form of a groove that converges toward the ligation part 310. The groove converging toward the ligation part 310 means a groove that gradually decreases in width as it approaches the ligation part 310. FIG. 8A illustrates a case in which the insertion guiding part 312 is formed as a wedge-shaped inclined surface, and FIG. 8B illustrates a case in which a semicircular-shaped insertion guiding part 312 is formed.

In addition to the exemplarily illustrated form, any form of groove that converges towards the ligation part 310 would be suitable for application as the insertion guiding part 312. By the convergence inducing action of the insertion guiding part 312, even a bundle of electrode tabs 120 having a great thickness can smoothly enter the ligation part 310, thereby significantly reducing the likelihood of problems such as bending, folding, or tearing of the electrode tabs 120 during the insertion process.

### [Description of Reference Numerals]

10: secondary battery, 20: case
100: electrode assembly, 110: unit cell
120: electrode tab, 130: excess length part
132: U-shaped part, 200: electrode terminal
300: clip, 310: ligation part
312: insertion guiding part, 320: welding part
330: friction-reducing structure, 332: embossing structure
334: low-friction coating layer

## Claims

1. A secondary battery (10), comprising:
an electrode assembly (100) in which a plurality of unit cells (110) are stacked, and
an electrode terminal (200),
wherein each of the plurality of unit cells (110) comprises an electrode having an electrode tab (120),
wherein the electrode tabs (120) of the plurality of unit cells (110) extend from the electrode assembly (100), and are gathered together and electrically connected to the electrode terminal (200) of the secondary battery (10), and
wherein the electrode tab (120) of each unit cell (110) includes an excess length part (130) configured to prevent stress in the electrode tab (120) caused by a change in relative position between the unit cell (110) and the electrode terminal (200), corresponding to the swelling of the electrode assembly (100);
wherein the electrode tab (120) of each unit cell (110), which extends from the electrode assembly (100), is supported by a clip (300) electrically connected to the electrode terminal (200), and
**characterized in that** the excess length part (130) is formed on a side of a ligation part (310) of the clip (300) opposite the electrode assembly (100),
wherein an end portion of the excess length part (130) is welded to the clip (300),
wherein the excess length part (130) forms a U-shaped part (132) between the ligation part (310) and the welded end portion.

2. The secondary battery (10) of claim 1, wherein the electrode assembly (100) is provided in plural, and
wherein the electrode tabs (120) extending from each of the plurality of electrode assemblies (100) forms the ligation part (310).

3. The secondary battery (10) of claim 2, wherein the clip (300) is provided in plural corresponding to the number of electrode assemblies (100),
wherein each of the electrode assemblies (100) is supported by the ligation part (310) of the corresponding clip (300), and
wherein the end portion of the excess length part (130) provided by the electrode tabs (120) extending from each electrode assembly (100) is welded to the corresponding clip (300).

4. The secondary battery (10) of claim 2, wherein the clip (300) includes a plurality of the ligation parts (310) corresponding to the number of electrode assemblies (100), and
wherein each of the electrode assemblies (100) is supported by the corresponding ligation part (310).

5. The secondary battery (10) of claim 4, wherein the end portion of the excess length part (130) provided by the electrode tabs (120) extending from each electrode assembly (100) is welded to the clip (300).

6. The secondary battery (10) of claim 2, wherein the excess length part (130) provided by the electrode tabs (120) extending from each of the plurality of electrode assemblies (100) forms a U-shaped part (132) between the ligation part (310) and the welded end portion.

7. The secondary battery (10) of claim 1, wherein the clip (300) includes a friction-reducing structure (330) on a contact surface of the ligation part (310), which supports the electrode tabs (120) of the electrode assembly (100).

8. The secondary battery (10) of claim 7, wherein the friction-reducing structure (330) is an embossing structure (332) formed on the contact surface of the ligation part (310).

9. The secondary battery (10) of claim 7, wherein the friction-reducing structure (330) is a low-friction coating layer (334) formed on the contact surface of the ligation part (310).

10. The secondary battery (10) of claim 1, wherein the clip (300) includes an insertion guiding part (312) assisting the electrode tab (120) of each unit cell (110) to be inserted into the ligation part (310).

11. The secondary battery (10) of claim 10, wherein the insertion guiding part (312) is a groove provided in a form that converges towards the ligation part (310).

## Patentansprüche

1. Sekundärbatterie (10) aufweisend:
eine Elektrodenanordnung (100), in der mehrere Einheitszellen (110) gestapelt sind,
und
einen Elektrodenanschluss (200),
wobei jede der mehreren Einheitszellen (110) eine Elektrode mit einer Elektrodenlasche (120) aufweist,
wobei sich die Elektrodenlaschen (120) der mehreren Einheitszellen (110) von der Elektrodenanordnung (100) erstrecken und zusammengefasst und elektrisch mit dem Elektrodenanschluss (200) der Sekundärbatterie (10) verbunden sind, und
wobei die Elektrodenlasche (120) jeder Einheitszelle (110) ein Überlängenteil (130) aufweist, das konfiguriert ist, eine Spannung in der Elektrodenlasche (120) zu verhindern, die durch eine Änderung der relativen Position zwischen der Einheitszelle (110) und dem Elektrodenanschluss (200) verursacht wird, die dem Aufschwellen der Elektrodenanordnung (100) entspricht;
wobei die Elektrodenlasche (120) jeder Einheitszelle (110), die sich von der Elektrodenanordnung (100) erstreckt, von einem Clip (300) getragen wird, der elektrisch mit dem Elektrodenanschluss (200) verbunden ist, und
**dadurch gekennzeichnet, dass** das Überlängenteil (130) auf einer Seite eines Ligationsteils (310) des Clips (300) gegenüber der Elektrodenanordnung (100) ausgebildet ist,
wobei ein Endabschnitt des Überlängenteils (130) an den Clip (300) geschweißt ist,
wobei das Überlängenteil (130) ein U-förmiges Teil (132) zwischen dem Ligationsteil (310) und dem geschweißten Endabschnitt bildet.

2. Sekundärbatterie (10) nach Anspruch 1, wobei die Elektrodenanordnung (100) mehrfach bereitgestellt ist, und
wobei die Elektrodenlaschen (120), die sich von jeder der mehreren Elektrodenanordnungen (100) erstrecken, das Ligationsteil (310) bilden.

3. Sekundärbatterie (10) nach Anspruch 2, wobei die Klammer (300) mehrfach entsprechend der Anzahl von Elektrodenanordnungen (100) bereitgestellt ist,
wobei jede der Elektrodenanordnungen (100) von dem Ligationsteil (310) der jeweiligen Klammer (300) getragen wird, und
wobei der Endabschnitt des Überlängenteils (130), der von den Elektrodenlaschen (120) bereitgestellt ist, die sich von jeder Elektrodenanordnung (100) erstrecken, an die jeweilige Klammer (300) geschweißt ist.

4. Sekundärbatterie (10) nach Anspruch 2, wobei die Klammer (300) mehrere der Ligationsteile (310) entsprechend der Anzahl von Elektrodenanordnungen (100) aufweist, und
wobei jede der Elektrodenanordnungen (100) von dem jeweiligen Ligationsteil (310) getragen wird.

5. Sekundärbatterie (10) nach Anspruch 4, wobei der Endabschnitt des Überlängenteils (130), der von den Elektrodenlaschen (120) bereitgestellt ist, die sich von jeder Elektrodenanordnung (100) erstrecken, an die Klammer (300) geschweißt ist.

6. Sekundärbatterie (10) nach Anspruch 2, wobei das Überlängenteil (130), das von den Elektrodenlaschen (120) bereitgestellt ist, die sich von jeder der mehreren Elektrodenanordnungen (100) erstrecken, ein U-förmiges Teil (132) zwischen dem Ligationsteil (310) und dem geschweißten Endabschnitt bildet.

7. Sekundärbatterie (10) nach Anspruch 1, wobei die Klammer (300) eine reibungsreduzierende Struktur (330) auf einer Kontaktfläche des Ligationsteils (310) aufweist, die die Elektrodenlaschen (120) der Elektrodenanordnung (100) trägt.

8. Sekundärbatterie (10) nach Anspruch 7, wobei die reibungsreduzierende Struktur (330) eine Prägestruktur (332) ist, die auf der Kontaktfläche des Ligationsteils (310) gebildet ist.

9. Sekundärbatterie (10) nach Anspruch 7, wobei die reibungsreduzierende Struktur (330) eine reibungsarme Beschichtungsschicht (334) ist, die auf der Kontaktfläche des Ligationsteils (310) gebildet ist.

10. Sekundärbatterie (10) nach Anspruch 1, wobei die Klammer (300) ein Einführungsführungsteil (312) aufweist, das die Elektrodenlasche (120) jeder Einheitszelle (110) beim Einführen in das Ligationsteil (310) unterstützt.

11. Sekundärbatterie (10) nach Anspruch 10, wobei das Einführungsführungsteil (312) eine Nut ist, die in einer Form bereitgestellt ist, die zum Ligationsteil (310) hin konvergiert.

## Revendications

1. Batterie secondaire (10), comprenant :
un ensemble d'électrodes (100) dans lequel sont empilées une pluralité de cellules unitaires (110), et
une borne d'électrode (200),
chacune de la pluralité de cellules unitaires (110) comprenant une électrode dotée d'une languette d'électrode (120),
les languettes d'électrode (120) de la pluralité de cellules unitaires (110) s'étendant depuis l'ensemble d'électrodes (100), et étant rassemblées et connectées électriquement à la borne d'électrode (200) de la batterie secondaire (10), et
la languette d'électrode (120) de chaque cellule unitaire (110) comprenant une partie de sur-longueur (130) configurée pour empêcher toute contrainte dans la languette d'électrode (120) causée par un changement de la position relative entre la pluralité de cellules unitaires (110) et la borne d'électrode (200), correspondant au gonflement de l'ensemble d'électrodes (100) ;
la languette d'électrode (120) de chaque cellule unitaire (110) s'étendant depuis l'ensemble d'électrodes (100) étant soutenu par un clip (300) connecté électriquement à la borne d'électrode (200), et
**caractérisée en ce que** la sur-longueur (130) est formée sur un côté d'un élément de ligature (310) du clip (300) face à l'ensemble d'électrodes (100),
une partie terminale de la sur-longueur (130) étant soudée au clip (300),
la sur-longueur (130) formant une partie en U (132) entre l'élément de ligature (310) et la partie terminale soudée.

2. Batterie secondaire (10) selon la revendication 1, l'ensemble d'électrodes (100) étant agencé en une pluralité, et
les languettes d'électrode (120) s'étendant depuis chacune de la pluralité d'ensembles d'électrodes (100) constituant l'élément de ligature (310).

3. Batterie secondaire (10) selon la revendication 2, le clip (300) étant agencé en une pluralité correspondant au nombre d'ensembles d'électrodes (100),
chacun des ensembles d'électrode (100) étant supportée par l'élément de ligature (310) du clip correspondant (300), et
la partie terminale de la sur-longueur (130) agencée par les languettes d'électrode (120) s'étendant depuis chaque ensemble d'électrodes (100) étant soudée au clip correspondant (300).

4. Batterie secondaire (10) selon la revendication 2, le clip (300) comprenant une pluralité d'éléments de ligature (310) correspondant au nombre d'ensembles d'électrodes (100), et
chacun des ensembles d'électrode (100) étant supporté par l'élément de ligature (310) correspondant.

5. Batterie secondaire (10) selon la revendication 4, la partie terminale de l'élément de la sur-longueur (130) agencée par les languettes d'électrode (120) s'étendant depuis chaque ensemble d'électrode (100) étant soudée au clip (300).

6. Batterie secondaire (10) selon la revendication 2, l'élément de la sur-longueur (130) agencée par les languettes d'électrode (120) s'étendant depuis chacune de la pluralité d'ensemble d'électrodes (100) formant un ensemble en U (132) entre l'élément de ligature (310) et la partie terminale soudée.

7. Batterie secondaire (10) selon la revendication 1, le clip (300) comprenant une structure sans friction (330) sur une surface de contact de l'élément de ligature (310), qui supporte les languettes d'électrode (120) de l'ensemble d'électrodes (100).

8. Batterie secondaire (10) selon la revendication 7, la structure sans friction (330) étant une structure de gaufrage (332) formée sur la surface de contact de l'élément de ligature (310).

9. Batterie secondaire (10) selon la revendication 7, la structure sans friction (330) étant une couche de revêtement à faible frottement (334) formée sur la surface de contact de l'élément de ligature (310).

10. Batterie secondaire (10) selon la revendication 1, le clip (300) comprenant une partie de guidage d'insertion (312) assistant l'insertion de la languette d'électrode (120) de chaque cellule unitaire (110) dans l'élément de ligature (310).

11. Batterie secondaire (10) selon la revendication 10, la partie de guidage d'insertion (312) étant une cannelure agencée sous une forme convergeant vers l'élément de ligature (310).
